# EUROPEAN PATENT SPECIFICATION

(11) **EP 0 407 136 B1**
(45) Date of publication and mention of the grant of the patent: **27.04.1994**
(21) Application number: 90307247.8
(22) Date of filing: 03.07.1990
(51) Int. Cl.: F25J 3/04, F25J 3/08

(54) **Generation and purification of nitrogen.**
Erzeugung und Reinigung von Stickstoff
Génération et purification pour obtenir de l'azote.

(30) Priority: 05.07.1989 US 376058
(43) Date of publication of application: 09.01.1991
(73) Proprietor: THE BOC GROUP, INC., Murray Hill, New Jersey 07974 (US)
(72) Inventor: Kamrath, David J., Asbury, New Jersey 08822 (US)
(74) Representative: Wickham, Michael

(56) References cited:
- FR-A- 2 578 532
- GB-A- 2 170 894
- US-A- 4 668 260

## Description

This invention relates to a process and generator for separating nitrogen from air and for purifying liquid nitrogen. In particular, it relates to a process to purify merchant liquid nitrogen containing undesirable amounts of oxygen, using the distillation column of an on-site nitrogen generator, to produce ultrapure liquid nitrogen which may be stored for use during periods of excess demand for nitrogen or the shutdown of the nitrogen generator or may be exported for sale as a premium grade liquid product.

Nitrogen generators are designed to meet the typical requirements for 'inerting' applications in chemical complexes, oil refineries, pharmaceutical plants, metal processing, semiconductor manufacturing, float glass production and many other key industrial processes. In certain applications, for example silicon wafer fabrication, it is necessary to minimise the oxygen content in the nitrogen produced. Conventional nitrogen generating plants can be operated to produce nitrogen containing less than 0.5 vppm oxygen (where vppm is volumetric parts per million).

Usually, nitrogen generators are provided with a liquid nitrogen storage tank and vaporiser to supply nitrogen during periods of nitrogen plant generator shutdown or when demand exceeds generator capacity. It is also possible to provide merchant liquid nitrogen for plant back-up; however, it is usually produced to standard commercial specifications of 2.0 to 5.0 vppm oxygen. Such nitrogen would not be sufficiently pure for an electronics customer who requires less than 0.5 vppm oxygen content. Even if liquid nitrogen is produced at a high purity in the merchant plant, it may become contaminated during distribution. For example, liquid nitrogen produced at a merchant plant at approximately 1 vppm oxygen may result in a delivered product containing nearly 2 vppm.

In contrast, an on-site nitrogen generator can produce product containing less than 0.5 vppm oxygen. Thus it is most desirable to provide for on-site production of liquid nitrogen for use during periods of nitrogen generator outage or excess demand for nitrogen rather than to use merchant liquid nitrogen imported by truck from a liquid nitrogen plant. It is also possible to utilise the nitrogen generator to 'ultrapurify' imported commercial grade product for reshipment to customers requiring ultra high purity nitrogen in quantities too small to justify a dedicated onsite plant.

This problem of back-up has been addressed by producing and storing high purity liquid nitrogen from the nitrogen generator. A conventional waste expansion cycle nitrogen generator can produce up to about 5% of its product as ultrapure liquid nitrogen with no loss in overall product recovery. This method, however, is not entirely satisfactory. First, about 25 days are required to fill a storage tank sized to provide 30 hours of nitrogen for plant "back-up" and, further, full nitrogen generation capability is not available during this filling period. Secondly, power consumption for a nitrogen generator plant capable of producing 5% of its production as liquid nitrogen is about 25% higher than that for a plant designed to produce only nitrogen gas, and such power loss is not recoverable after the storage tank is filled and liquid production is terminated.

US-A-2,951,346 describes a stand-alone laboratory size liquid nitrogen generator, which produces relatively low purity liquid nitrogen from air.

US-A-3,620,032 describes a method for producing high purity oxygen from commercial grade oxygen. Oxygen from the sump is admitted to the distillation column at an intermediate point in the column.

US-4,780,118 describes a process plant for ultrapurifying liquid oxygen.

US-A-4,668,260; US-A-4,671,813; and US Patent No 4,698,079 all describe plants for producing high purity nitrogen for use in electronics applications. US-A-4,668,260, in particular, discloses a nitrogen generator whose refrigeration demands are met by introducing liquid nitrogen from an external source into the top of a distillation column employed by it to separate nitrogen from air.

This invention aims at providing a nitrogen generator and nitrogen generation process for separating nitrogen of high purity from air, wherein merchant liquid nitrogen from an external source may be purified to provide liquid nitrogen equivalent in quality to the product gaseous nitrogen without loss of efficiency in nitrogen generation.

According to the invention there is provided a nitrogen generator for separating nitrogen from air and for purifying liquid nitrogen, including a distillation column for separating oxygen and nitrogen from air, the column having a top and a bottom, means for contacting a rising vapour stream with a descending liquid stream, and an outlet for relatively pure gaseous nitrogen product, and means for introducing relatively impure merchant liquid nitrogen into the column, characterised in that (i) said means for introducing liquid nitrogen is arranged to introduce the liquid nitrogen at an intermediate point in the column where the liquid stream composition is substantially equivalent to the liquid nitrogen composition, (ii) the column additionally includes means for withdrawing a amount of purified liquid nitrogen from the top of the column substantially equivalent to the amount of relatively impure liquid nitrogen introduced into the column, and (iii) there is an expansion turbine for providing refrigeration to the generator.

The invention also provides a nitrogen generating process for separating nitrogen from air and for purifying liquid nitrogen, including separating oxygen and nitrogen in a distillation column, in which a rising vapour stream and a descending liquid stream are contacted with each other, withdrawing relatively pure gaseous product from the distillation column and introducing liquid nitrogen into the column, characterised in that said liquid nitrogen is relatively impure and is introduced into the column at an intermediate point where the liquid stream composition is substantially equivalent to the composition of said relatively impure liquid nitrogen, purified liquid nitrogen is withdrawn from the top of the column in an amount substantially equal to the amount of relatively impure liquid nitrogen introduced into the column at said intermediate point, and an expansion turbine is operated to provide refrigeration to the process.

The process and nitrogen generator according to the invention are now described by way of example with reference to the accompanying drawings, in which:

Fig. 1 is a simplified flow diagram of a typical nitrogen generator plant, including the process and apparatus of this invention.

Fig. 2 is a schematic representation of the operating line of the distillation column using the process of this invention.

The process and apparatus of this invention is preferably used in conjunction with a nitrogen generator plant which supplies nitrogen for inerting atmospheres for chemical processing, float glass manufacture, and silicon chip manufacture and, when mixed with hydrogen, for reducing atmospheres for metal heat treating. Such nitrogen generator plants may also be used for enhancing oil recovery by nitrogen injection into wells. The plants can be operated to produce ultrapure liquid nitrogen for electronics applications or operated to produce lower purity liquid nitrogen where that is adequate.

The invention herein is adapted for use in conjunction with such nitrogen generators in order to purify commercial or merchant grade liquid nitrogen for use during periods of nitrogen generator outage or excess demand for nitrogen or for export as a premium grade liquid product. It is possible to use the invention herein on nitrogen generators having single or plural columns, e.g. double columns. The invention is dependent on the thermodynamic and equilibrium characteristics of high purity nitrogen distillation rather than on any particular process for generating nitrogen.

The invention is preferably used in conjunction with air expansion nitrogen generating plants and waste expansion nitrogen generating plants.

In general, air is a gaseous mixture containing oxygen, nitrogen, argon and certain rare gases in fixed quantities. These components are separated by such nitrogen generators through the use of low temperature distillation.

The air separation process used by the preferred nitrogen generators comprises:
1. compressing air;
2. purifying and cooling the air to a temperature at which it liquefies;
3. separating the air into component parts by low temperature distillation (or in one or more rectification columns)
4. product recovery and rewarming of separated components.

### Compressing

Atmospheric air is filtered, compressed and cooled to ambient temperature in an aftercooler and delivered to a surge drum. The surge drum cushions the air compressor during exchanger reversals (see below) and separates condensed water vapour from the air stream.

### Cooling

Compressed air enters reversing heat exchangers, which have fixed passages for pure nitrogen product and 'reversing' passages for the air and waste streams. Incoming air is cooled through heat exchange with nitrogen product and waste streams. As the temperature falls, water and carbon dioxide impurities are deposited on the exchanger surface. Periodically, the air and waste streams are reversed and these impurities are removed by the low pressure waste stream.

Reversals are controlled by a system of automatic reversing valves at the warm end of the plant, which operate at predetermined intervals. Check valves are used to control the flow at the cold end of the heat exchangers. Air from the reversing heat exchangers passes through a silica gel adsorber to remove traces of carbon dioxide and hydrocarbons. Part of the air is then partially rewarmed in a fixed pass of the reversing exchanger and then cooled and partially liquefied in a liquefier exchanger before entering a rectification column. The remainder of the air is expanded through an expansion turbine into the column. The expansion turbine provides the bulk of the refrigeration requirements of the system.

### Separating Components

Air entering a high pressure rectification column is separated into oxygen and nitrogen by countercurrent contact and mass exchange between a rising vapour stream and a descending liquid stream. Oxygen-rich liquid is drawn off at the bottom of the column and then expanded into the low pressure side of a reflux condenser where it vaporises against condensing nitrogen reflux. The oxygen-rich vapour leaves the condenser as waste gas and is returned through the liquefier and reversing heat exchangers where it cools the incoming air stream.

The term "column" or "rectification column" as used herein means a distillation or fractionation column or zone, i.e., a contacting column or zone, wherein liquid and vapour phases are countercurrently contacted to effect separation of a fluid mixture, as for example, by contacting of the vapour and liquid phases on a series of vertically spaced trays or plates mounted within the column or alternatively, on packing elements with which the column is filled. The term, "double column" is used to mean a higher pressure column having its upper end in heat exchange relation with the lower end of a lower pressure column. The column of the nitrogen generator is provided with a means for introducing merchant liquid nitrogen into the distillation column at an intermediate distillation plate or position in the column, the plate having a column liquid stream substantially equivalent in composition to the entering merchant liquid nitrogen.

As used herein, the term tray or plate means a contacting stage, which is not necessarily an equilibrium stage, and may mean a contacting apparatus having packing capable of separation equivalent to one tray. The term "equilibrium stage" means a vapour-liquid contacting stage whereby the vapour and liquid leaving the stage are in mass transfer equilibrium, e.g. a tray having 100 percent efficiency or a packing element height equivalent to one theoretical plate.

### Product Recovery

Nitrogen vapour from the top of the rectification column is returned through the liquefier and a fixed passage in the reversing exchangers to recover its refrigeration and cool the incoming gases.

Typically, when the invention herein is not used, the nitrogen generator is fitted with a liquid nitrogen control system which allows approximately 5% of the total nitrogen product to be withdrawn as liquid and stored for subsequent use. When utilising the invention herein, however, purified liquid nitrogen is withdrawn from the top of the column in amounts substantially equivalent to the amount of merchant liquid nitrogen introduced to the column, while also producing nitrogen product gas. This purified liquid nitrogen is stored for use during excess demands for nitrogen or nitrogen generator plant outage or exported.

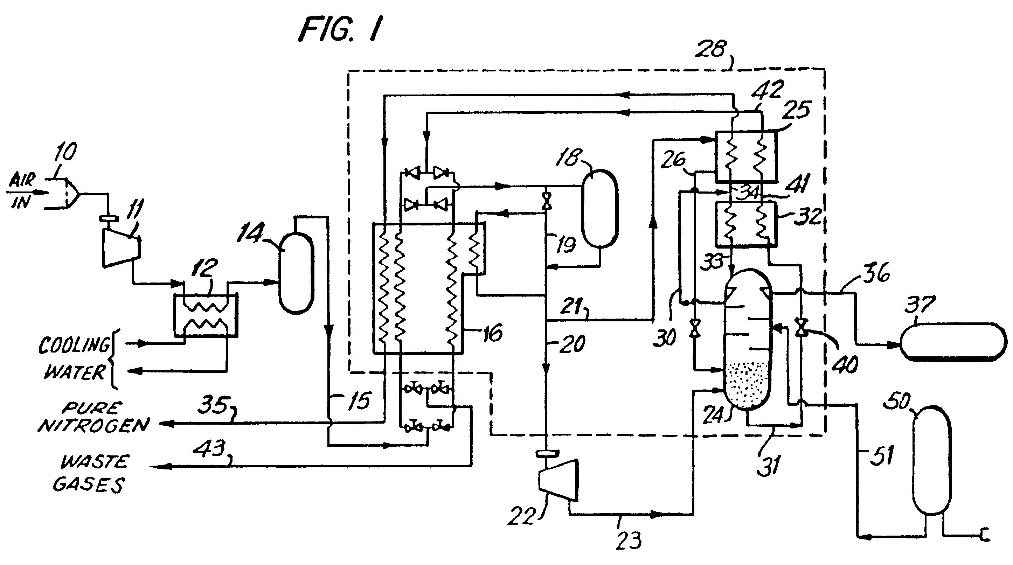

More specifically, referring to Fig. 1, depicting this invention used in a preferred nitrogen generator plant, air is drawn from the atmosphere through a dust filter 10 to the suction of multistage air compressor 11. The air is compressed in the compressor 11 and then cooled in an aftercooler 12 by cooling water. The air then passes through a surge drum 14. This drum 14 serves to reduce pressure fluctuations caused by change-overs of the reversing heat exchanger 16, and serves as a water separator.

Air enters the reversing heat exchanger 16, and is cooled to within a few degrees of its dewpoint. During passage through the exchanger 16, substantially all the remaining atmospheric water content and other impurities are deposited on the cold surfaces of the exchanger 16. If any trace impurities exist, they are separated from the air stream in a gas phase adsorber 18, which is packed with silica gel. Impurities which are deposited on the surface of the exchanger are periodically reabsorbed into the waste stream when change-over of the heat exchanger 16 occurs.

Part of the cold-purified air from the adsorber 18 is returned via conduit 19 through a pass of the reversing heat exchanger 16 to provide a means for balancing the temperature of the exchanger, and then rejoins the main air stream after the adsorber 18.

The air flow from the adsorber 18 is then divided into two streams 20, 21.

The first stream 20 passes through an expansion turbine 22, and the expanded air stream 23 enters the base of the column 24 as a saturated gas just above its dewpoint. The second stream 21, passes through a liquefier 25 in the form of an exchanger, where the air is cooled and liquefied against other streams flowing countercurrently therethrough, and subsequently enters a rectification column 24 via conduit 26.

In a preferred column 24, vapour passes upward through perforations of each sieve type distillation tray contacting the descending liquid. In accordance with known principles of distillation, air is separated into two main streams, (a) a nitrogen-rich product stream, which is withdrawn from the top of the column 24 as a gas stream 30, and (b) an oxygen-rich stream which collects in the sump of the column 24. A portion 33 of gaseous nitrogen stream 30 passes through a condenser 32 where it is condensed and returned to the column 24 to provide reflux. The remaining gaseous nitrogen 34 is warmed to ambient temperature by passage through the liquefier 25 and through the reversing heat exchanger 16, leaving the cold box 28 via conduit 35, for immediate use. If adequate refrigeration is supplied by expansion turbine 22, more liquid reflux 33 may be produced than is required for distillation. The excess high purity liquid nitrogen product 36 is removed from the top of column 24 and sent to storage tank 37 where it can be utilised for plant back-up or exported for commercial sale.

The oxygen-rich stream 31 is expanded through a valve 40, and evaporated in the condenser 32. The gaseous oxygen-rich stream 41 is further warmed in liquefier 25 and then passed via conduit 42 through the section of the reversing heat exchanger 16 containing atmospheric impurities deposited from the previous cycle. These impurities are readsorbed due to the effect of both pressure and temperature differences between the air and waste streams. The waste gases 43 are then vented via a silencer (not shown) to the atmosphere.

Still referring to Fig. 1, in the improvement contemplated herein, merchant or commercial grade liquid nitrogen containing from 2 to 5 vppm oxygen is delivered to storage tank 50. Adequate pressure is maintained in storage tank 50 to transfer liquid nitrogen at a controlled rate through conduit 51 to an intermediate plate in distillation column 24. An approximately equivalent amount of purified (usually less than 0.5 vppm oxygen content) liquid nitrogen reflux returning from condenser 32 is withdrawn from the top of column 24 (above the top tray) and transferred either hydraulically or by pump through conduit 36 to storage tank 37.

Important characteristics of this invention are:
(a) purification of the merchant or commercial grade liquid nitrogen is accomplished at a column reflux liquid rate approximately equal to the reflux rate of a conventional nitrogen generator less the purified liquid nitrogen withdrawn. This results in a reduced liquid to vapour ratio in the section of the column above the merchant liquid nitrogen feed point;
(b) the merchant or commercial grade liquid nitrogen is introduced into the distillation column at a point where its composition matches that of the column liquid stream, typically several trays from the top; and
(c) purified liquid nitrogen, e.g., having less than 0.5 vppm oxygen content, is withdrawn from the top of the column at substantially the same rate as the amount of merchant or commercial grade liquid nitrogen introduced to the column.

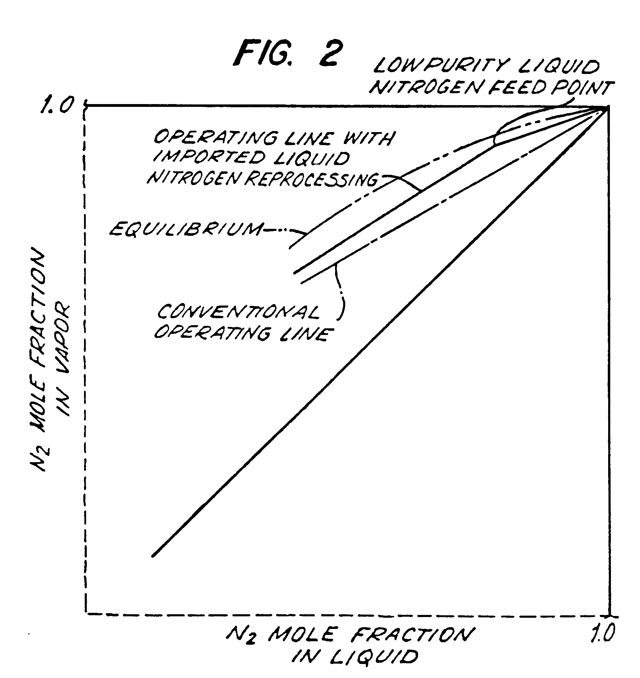

Referring to Fig. 2, the foregoing is possible because of the convex shape of the liquid-vapour equilibrium line for the oxygen-nitrogen system which permits a very high nitrogen purity to be achieved even at a reduced liquid to vapour ratio in the top section of the column. It can be seen that the slope of the operating line for the column above the feed point for the merchant liquid nitrogen is less than the operating line below the feed point. The slope of the equilibrium line in this region is also small, however, as long as the equilibrium, and operating lines do not intersect, the desired separation can be attained.

The maximum flow rate of merchant liquid nitrogen that can be processed is determined by the minimum reflux ratio for the trays above the merchant liquid feed point. It may be necessary to slightly reduce the gaseous nitrogen recovery to increase the liquid-vapour ratio (L/V) below the feed point so that product purity can be maintained.

Thus, with the use of this invention, the "on-site" nitrogen generator may be used to purify delivered commercial merchant grade liquid nitrogen to a product purity equivalent to that of the gaseous nitrogen produced by the nitrogen generator (less than 0.5 vppm) while simultaneously producing gaseous nitrogen for use.

Since the invention is based on the equilibrium properties of the oxygen-nitrogen system, it is applicable to all plant designs where separation of these components by distillation is employed. Although the quantity of merchant liquid nitrogen that can be purified is dependent on the particular nitrogen generator plant design, a processing rate of about 20% of total nitrogen production capacity can typically be achieved.

The application of this invention to a conventional waste expansion plant will reduce the filling time of a storage tank capable of supplying 30 days of "back-up" nitrogen from 25 days to 5 days. If this invention is used in conjunction with a nitrogen generating plant designed to produce only gaseous nitrogen, a similar storage tank can be filled in about 6.25 days at a 25% savings in power.

## Claims

1. A nitrogen generator for separating nitrogen from air and for purifying liquid nitrogen, including a distillation column (24) for separating oxygen and nitrogen from air, the column (24) having a top and a bottom, means for contacting a rising vapour stream with a descending liquid stream, and an outlet for relatively pure gaseous nitrogen product, and means (51) for introducing relatively impure merchant liquid nitrogen into the column (24), characterised in that (i) said means (51) for introducing liquid nitrogen is arranged to introduce the liquid nitrogen at an intermediate point in the column (24) where the liquid stream composition is substantially equivalent to the liquid nitrogen composition, (ii) the column additionally includes means (36) for withdrawing a amount of purified liquid nitrogen from the top of the column (24) substantially equivalent to the amount of relatively impure liquid nitrogen introduced into the column (24), and (iii) there is an expansion turbine (22) for providing refrigeration to the generator.

2. A nitrogen generator according to Claim 1, further including:
a vessel (50) for storing the merchant liquid nitrogen prior to introducing it into the column (24) and a vessel (37) for storing the purified liquid nitrogen after it is withdrawn from the column (24).

3. A nitrogen generator according to Claim 1 or Claim 2, wherein the intermediate point is a distillation plate in the column (24).

4. A nitrogen generating process for separating nitrogen from air and for purifying liquid nitrogen, including separating oxygen and nitrogen in a distillation column, in which a rising vapour stream and a descending liquid stream are contacted with each other, withdrawing relatively pure gaseous product from the distillation column and introducing liquid nitrogen into the column, characterised in that said liquid nitrogen is relatively impure and is introduced into the column at an intermediate point where the liquid stream composition is substantially equivalent to the composition of said relatively impure liquid nitrogen, purified liquid nitrogen is withdrawn from the top of the column in an amount substantially equal to the amount of relatively impure liquid nitrogen introduced into the column at said intermediate point, and an expansion turbine is operated to provide refrigeration to the process.

5. A process according to Claim 4, wherein the relatively impure liquid nitrogen contains from 0.5 to 5 vppm (volumetric parts per million) of oxygen.

6. A process according to Claim 4 or Claim 5, wherein the gaseous nitrogen product contains less than 0.5 vppm (volumetric parts per million) of oxygen.

7. A process according to any one of Claim 4 to 6, wherein the oxygen concentration in the purified liquid nitrogen is substantially the same as the oxygen concentration in the gaseous nitrogen product.

8. A process according to any one of Claims 4 to 7, in which the purified liquid nitrogen is sent to storage.

## Patentansprüche

1. Eine Stickstofferzeugungsvorrichtung zum Trennen von Stickstoff von Luft und zum Reinigen von flüssigem Stickstoff mit einer Destillationssäule (24) zum Trennen von Sauerstoff und Stickstoff von Luft, wobei die Säule (24) ein Oberteil und ein Unterteil, Mittel, die einen aufsteigenden Dampfstrom mit einem absteigenden Flüssigkeitsstrom in Kontakt bringen, und einen Auslaß für ein relativ reines gasförmiges Stickstoffprodukt und Mittel (51) aufweist, die relativ unreinen Handelsflüssigstickstoff in die Säule (24) einführen,
dadurch **gekennzeichnet,**
daß (i) das Mittel (51) zum Einführen flüssigen Stickstoffs angeordnet ist, um den flüssigen Stickstoff an einem Zwischenpunkt in der Säule (24) einzuführen, wo die Flüssigstromzusammensetzung im wesentlichen äquivalent zu der Flüssigstickstoffzusammensetzung ist, daß (ii) die Säule zusätzlich Mittel (36) einschließt, um dem Oberteil der Säule (24) eine Menge gereinigten flüssigen Stickstoffs zu entnehmen, die im wesentlichen äquivalent zu der Menge relativ unreinen flüssigen Stickstoffs ist, die in die Säule (24) eingeführt wird, und daß (iii) es eine Expansionsturbine (22) gibt, um eine Kühlung für die Erzeugungsvorrichtung zu schaffen.

2. Eine Stickstofferzeugungsvorrichtung nach Anspruch 1, ferner mit:
einem Gefäß (50) zum Lagern des Handelsflüssigstickstoffs, bevor er in die Säule (24) eingeführt wird, und einem Gefäß (37) zum Lagern des gereinigten flüssigen Stickstoffs, nachdem er der Säule (24) entnommen wird.

3. Eine Stickstofferzeugungsvorrichtung nach Anspruch 1 oder Anspruch 2,
worin der Zwischenpunkt eine Destillationsplatte in der Säule (24) darstellt.

4. Ein Stickstofferzeugungsverfahren zum Trennen von Stickstoff von Luft und zum Reinigen flüssigen Stickstoffs, welches einschließt, daß Sauerstoff und Stickstoff in einer Destilationssäule getrennt werden, in welcher ein aufsteigender Dampfstrom und ein absteigender Flüssigkeitsstrom miteinander in Kontakt gebracht werden, ein relativ reines gasförmiges Produkt der Destillationssäule entnommen und flüssiger Stickstoff in die Säule eingeführt wird,
dadurch **gekennzeichnet,**
daß der flüssige Stickstoff relativ unrein ist und in die Säule an einem Zwischenpunkt eingeführt wird, wo die Flüssigkeitsstromzusammensetzung im wesentlichen äquivalent zu der Zusammensetzung des relativ unreinen flüssigen Stickstoffs ist, gereinigter flüssiger Stickstoff dem Oberteil der Säule in einer Menge entnommen wird, die im wesentlichen gleich der Menge relativ unreinen flüssigen Stickstoffs ist, die in die Säule am Zwischenpunkt eingeführt wird, und eine Expansionsturbine betrieben wird, um eine Kühlung für das Verfahren zu schaffen.

5. Ein Verfahren nach Anspruch 4,
worin der relativ unreine flüssige Stickstoff von 0.5 bis 5 vppm (Volumenteile pro Million) Sauerstoff enthält.

6. Ein Verfahren nach Anspruch 4 oder Anspruch 5, worin das gasförmige Stickstoffprodukt weniger als 0.5 vppm (Volumenteile pro Million) Sauerstoff enthält.

7. Ein Verfahren nach einem der Ansprüche 4 bis 6, worin die Sauerstoffkonzentration im gereinigten flüssigen Stickstoff im wesentlichen die gleiche ist wie die Sauerstoffkonzentration im gasförmigen Stickstoffprodukt.

8. Ein Verfahren nach einem der Ansprüche 4 bis 7, in welchem der gereinigte flüssige Stickstoff zu einer Lagerung befördert wird.

## Revendications

1. Générateur d'azote pour séparer l'azote de l'air et pour purifier l'azote liquide, le générateur comprenant une colonne (24) de distillation pour séparer l'oxygène et l'azote de l'air, la colonne (24) ayant un sommet et un fond, un moyen pour mettre un courant de vapeur ascendante en contact avec un courant de liquide descendant, et une sortie pour l'azote gazeux relativement pur obtenu comme produit, et un moyen (51) pour introduire de l'azote liquide marchand relativement impur dans la colonne (24), générateur caractérisé en ce que (i) ledit moyen (51) pour introduire de l'azote liquide est agencé de façon à introduire l'azote liquide en un point intermédiaire de la colonne (24) où la composition du courant liquide est sensiblement équivalente à la composition de l'azote liquide, (ii) la colonne comprend en outre un moyen (36) pour soutirer du sommet de la colonne (24) une quantité d'azote liquide purifié qui équivaut essentiellement à la quantité d'azote liquide relativement impur introduite dans la colonne (24), et (iii) il y a une turbine (22) de détente pour fournir de la réfrigération au générateur.

2. Générateur d'azote selon la revendication 1, comprenant en outre un récipient (50) pour stocker l'azote liquide marchand, avant son introduction dans la colonne (24), et un récipient (37) pour stocker l'azote liquide purifié après l'enlèvement de cet azote de la colonne (24).

3. Générateur d'azote selon la revendication 1 ou 2, dans lequel le point intermédiaire est un plateau de distillation dans la colonne (24).

4. Procédé de génération d'azote pour séparer l'azote de l'air et pour purifier l'azote liquide, comprenant la séparation de l'oxygène et de l'azote dans une colonne de distillation dans laquelle un courant de vapeur ascendante et un courant de liquide descendant sont mis mutuellement en contact, le retrait du produit gazeux relativement pur de la colonne de distillation et l'introduction d'azote liquide dans la colonne, procédé caractérisé en ce que ledit azote liquide est relativement impur et est introduit dans la colonne en un point intermédiaire où la composition du courant liquide est sensiblement équivalente à la composition dudit azote liquide relativement impur, de l'azote liquide purifié est soutiré du sommet de la colonne en une quantité sensiblement égale à la quantité d'azote liquide relativement impur introduite dans la colonne en ledit point intermédiaire, et l'on fait fonctionner une turbine de détente pour fournir de la réfrigération pour (la mise en oeuvre du) procédé.

5. Procédé selon la revendication 4, dans lequel l'azote liquide relativement impur contient de 0,5 à 5 parties volumétriques par million d'oxygène.

6. Procédé selon la revendication 4 ou la revendication 5, dans lequel l'azote gazeux produit contient moins de 0,5 partie volumétrique par million d'oxygène.

7. Procédé selon l'une quelconque des revendications 4 à 6, dans lequel la concentration de l'oxygène dans l'azote liquide purifié est essentiellement la même que la concentration de l'oxygène dans l'azote gazeux constituant un produit.

8. Procédé selon l'une quelconque des revendications 4 à 7, dans lequel l'azote liquide purifié est envoyé vers son magasinage ou son stockage.
